# EUROPÄISCHE PATENTANMELDUNG

(11) **EP 1 195 286 A2**
(43) Veröffentlichungstag der Anmeldung: **10.04.2002**
(21) Anmeldenummer: 01122892.1
(22) Anmeldetag: 24.09.2001
(51) Int. Cl.: B60L 3/00

(54) **Verfahren zum Überwachen einer Bremse und Verfahren zum Bremsen einer Lokomotive**

(30) Priorität: 05.10.2000 DE 10049415
(71) Anmelder: SIEMENS AKTIENGESELLSCHAFT, 80333 München (DE)
(72) Erfinder: Schaefer, Norbert, 91052 Erlangen (DE)

(57) **Zusammenfassung**

Die Erfindung betrifft ein Verfahren zum Überwachen einer elektrischen Bremse einer Lokomotive. Sie betrifft auch ein Verfahren zum Bremsen. Es ist vorgesehen, dass in der Lokomotive vorhandene Steuerungs- oder Sicherungsgeräte zum Überwachen der Bremse verwendet werden. Nach Erkennen einer Fehlfunktion einer elektrischen Bremse wird je nach Anforderung dann die Energieversorgung des Fahrmotors (3) unterbrochen und eine pneumatische Bremse wird aktiviert.

## Beschreibung

Die Erfindung betrifft ein Verfahren zum Überwachen einer elektrischen Bremse in einer Lokomotive. Die Erfindung betrifft auch ein Verfahren zum Bremsen einer Lokomotive oder eines Zuges unter Verwendung eines solchen Verfahrens zum Überwachen der Bremse.

Der Begriff "Lokomotive" umfasst hierbei alle Triebfahrzeuge für den Schienenverkehr.

In einer modernen elektrischen Lokomotive sind für den Betrieb erforderliche Steuerungsgeräte über ein Bussystem miteinander verbunden. Eines dieser modular aufgebauten Geräte ist eine elektrische Bremse.

Bisher ist es üblich, bei einer Notbremsung ausschließlich diese elektrische Bremse einzusetzen. Die in einer Lokomotive vorhandene pneumatische Bremse ist bei einer Notbremsung abgeschaltet. Würden nämlich beide Bremsen gleichzeitig eingesetzt werden, wäre die Bremswirkung so groß, dass z.B. der Pufferdruck einen zulässigen Höchstwert überschreiten würde. Auch könnte das Regeln des pneumatischen und des elektrischen Gleitschutzes problematisch werden. Ausschließlich die pneumatische Bremse für eine Notbremsung einzusetzen, würde einen längeren Bremsweg ergeben, so dass die Züge bei den gegebenen Blockabständen langsamer fahren müssten als bisher üblich.

Da die elektrische Bremse keinen Bremswiderstand aufweist und über ein Bussystem von einem Rechner angesteuert wird, kann sie infolge einer Störung in der Ansteuerung versagen. Es könnte sogar dazu kommen, dass für eine Notbremsung die pneumatische Bremse abgeschaltet wird, obwohl die elektrische Bremse nicht ausreichend funktioniert. Falls eine Lokomotive alleine fährt, ist keine Abbremsung möglich, wenn das Antriebs-Steuergerät (ASG) der Lokomotive das Rückhalteventil über das Brems-Steuergerät (BSG) so ansteuert, dass das Ventil den vorgesteuerten C-Druck absperrt. Sonst wird eine Abbremsung durch angekoppelte Wagen unterstützt. Eine Störung kann sogar bewirken, dass statt eines Bremsvorgangs eine Traktion erfolgt.

Würde in der Lokomotive die elektrische Bremse bei einer Notbremsung generell ausgeschaltet sein und nur noch die pneumatische Bremse wirken, so wäre zwar immer noch die elektrische Bremse als verschleißfreie Betriebsbremse installiert, aber diese darf dann nicht mehr generell in der Bremsberechnung mit angerechnet werden.

Die Folge wäre, dass der Betreiber der Lokomotive, wenn er entsprechende Geschwindigkeiten erreichen will, zu wenige Bremshundertstel für die Bremsberechnung zur Verfügung hätte und somit generell langsamer als sonst fahren müsste. Dieses hätte einen erheblichen wirtschaftlichen Schaden für den Betreiber zur Folge und würde das Aus für schnelle Hochleistungslokomotiven bedeuten.

Zur Erhöhung der Sicherheit ist bereits vorgeschlagen worden, die elektrische Bremse auf ihre Funktionssicherheit hin zu überwachen. Aus der DE 195 10 755 C2 ist eine Vorrichtung bekannt, mit der bei einer Notbremsung der Bremsvorgang überwacht wird, indem die Bremswirkung durch einen Verzögerungssensor gemessen wird. Unterschreitet die Verzögerung (negative Beschleunigung) bei einer Notbremsung einen Sollwert, dann wird ein Fehlersignal ausgelöst, das direkt für eine Ansteuerung verwendet werden kann. Beispielsweise werden pneumatische Bremsen aktiviert, wobei ein zu starkes Bremsen in Kauf genommen wird.

Die Verzögerungssensoren können, wie aus der DE-Patentanmeldung 100 04 430.1 hervorgeht, übliche Beschleunigungsaufnehmer sein.

Die bekannten Maßnahmen zur Überwachung einer elektrischen Bremse in einer Lokomotive erfordern ein zusätzliches Bauteil, nämlich den Verzögerungssensor mit der dazugehörigen Auswerteeinheit. Das verteuert die Lokomotive und erhöht den Wartungsaufwand.

Der Erfindung liegt die Aufgabe zugrunde, ein Verfahren zum Überwachen einer elektrischen Bremse in einer Lokomotive anzugeben, das ohne zusätzliche komplette Geräte in der Lokomotive auskommt. Es soll auch ein Verfahren zum Bremsen der Lokomotive oder eines Zuges angegeben werden, das zum Überwachen der Bremse keine zusätzlichen komkpletten Geräte erfordert.

Die Aufgabe, ein Verfahren zum Überwachen einer Bremse anzugeben, wird gemäß der Erfindung dadurch gelöst, dass in der Lokomotive vorhandene Steuerungs- oder Sicherungsgeräte verwendet werden.

Damit wird der Vorteil erzielt, dass nur durch eine geeignete Schaltung und ohne zusätzliche aufwendige Geräte oder Bauteile die Bremse auf ihre Funktionsfähigkeit hin überwacht werden kann.

Es können die vorhandenen Geräte modifiziert und technisch abgeändert oder ergänzt sein. In kleinerem Umfang können neue Bauteile, aber keine kompletten Geräte, hinzu kommen.

Beispielsweise ist ein Überwachungsprogramm (EBÜ) für die elektrische Bremse im Antriebs-Steuergerät (ASG) der Lokomotive integriert.

Das ASG ist ein Steuergerät mit Zentralrechner und Betriebssystem. Im ASG werden alle für die Antriebsregelung notwendigen Signale eingelesen, verarbeitet und Steuersignale, bzw. Signale, die den Ist-Zustand beschreiben, ausgegeben. Neben dem Zentralrechner können auch Signalprozessoren vorhanden sein. Diese verarbeiten die Signale des Zentralrechners und sind für die Regelung verantwortlich. Das EBÜ im ASG kann bei einer Abbremsung der Lokomotive das Ist-Moment des Fahrmotors mit dem gewünschten Soll-Moment vergleichen und erkennen, ob tatsächlich eine Verringerung der Geschwindigkeit eintritt.

Beispielsweise ist ein Überwachungsprogramm (EBÜ) für die elektrische Bremse im Zug-Steuergerät (ZSG) der Lokomotive integriert.

Das ZSG greift in der Regel auf den gleichen Zentralrechner und das gleiche Betriebssystem wie das ASG zurück. Das ZSG hat jedoch andere Aufgaben als das ASG. Das ZSG liest verschiedene Signale der gesamten Lokomotive ein, verarbeitet diese, bringt Zustände zur Anzeige und steuert Geräte an. Beispielsweise erkennt das ZSG Drehzahl-Signale des ASG. Mit dem integrierten Überwachungsprogramm (EBÜ) für die elektrische Bremse wird der Vorteil erzielt, dass eine Notbremsung auch dann zuverlässig möglich ist, wenn der Datenbus zwischen ASG und ZSG bzw. zu einem vorhandenen Bremssteuergerät gestört wäre, das die verschiedenen Bremssysteme ansteuert.

Beispielsweise ist ein Überwachungssystem EBÜ für die elektrische Bremse im Gleitschutzrechner integriert.

Im Bussystem des Gleitschutzrechners stehen unabhängige Drehzahl-Signale zur Verfügung, die zur Regelung des Gleitschutzes benötigt werden. Auf diese Weise wird der Vorteil erzielt, dass auch bei einer Störung der elektrischen Bremse ein Gleitschutz möglich ist.

Beispielsweise ist ein Überwachungsprogramm für die elektrische Bremse im Brems-Steuergerät (BSG) integriert. Dort kann ein Bussignal, das vom Antriebssteuergerät (ASG) kommt, mit einem Soll-Signal verglichen werden. Bei einer nicht tolerierbaren Abweichung wird vom Brems-Steuergerät z.B. direkt ein Rückhalteventil einer pneumatischen Bremse freigegeben.

Beispielsweise ist ein Überwachungsprogramm für die elektrische Bremse (EBÜ) in einer Zugsicherungseinrichtung (LZB, INDUSI) integriert.

Die Überwachungsprogramme haben folgende Eigenschaften:
- Von jedem Gerätehersteller selbst nach Vorgaben entwickelt
- Auf das Gerät angepasst
- Ausnutzung der eigenen oder fremder Sensorik zum Messen der Bremswirkung
- Wirkwege sind bestehende Wege, z.B. Multi Vehicle Bus (MVB) oder neue elektrische Leitungen.

Eine Zugsicherungseinrichtung berechnet aus der vor Fahrtantritt eingestellten Zuglänge und den vorhandenen Bremsen sowie aus Informationen über die Beschaffenheit der Strecke eine Bremskurve. Wird bei einer Notbremsung diese Bremskurve überschritten, wird das Rückhalteventil einer pneumatischen Bremse geöffnet und damit diese Bremse aktiviert. Der Datenbestand der Zugsicherungseinrichtung kann vorteilhafterweise für ein Überwachungsprogramm, das für die elektrische Bremse bestimmt ist, genutzt werden.

Die Aufgabe, ein Verfahren zum Bremsen einer Lokomotive oder eines Zuges unter Verwendung des Verfahrens zur Überwachung einer Bremse anzugegen, wird gemäß der Erfindung dadurch gelöst, dass nach Erkennen einer Fehlfunktion einer elektrischen Bremse die Energieversorgung des Fahrmotors unterbrochen wird und/oder eine pneumatische Bremse aktiviert wird.

Zum Aktivieren der pneumatischen Bremse werden die Signale der einzelnen Geräte in der Lokomotive in geeigneter Weise zusammen geschaltet und wirken so auf das Rückhalteventil der pneumatischen Bremse. Ebenso werden die Signale vor der Unterbrechung der Energieversorgung des Fahrmotors zusammen geschaltet. Die Zusammenschaltung kann über ein Oder-Glied erfolgen.

Es ist sichergestellt, dass die Lokomotive oder der Zug auch ohne funktionierende elektrische Bremse sicher angehalten werden können.

Zum Unterbrechen der Energieversorgung kann der Hauptschalter geöffnet werden, der den Motor mit dem Stromabnehmer der Lokomotive verbindet. Der Motor wird also schnell abgeschaltet.

Ein Beispiel für das Verfahren zum Überwachen einer Bremse und das Bremsverfahren nach der Erfindung werden anhand der Zeichnung näher erläutert:
- FIG 1: zeigt als Stand der Technik schematisch Steuerungs- und Sicherungsgeräte einer Lokomotive;
- FIG 2: zeigt die Schaltung der Figur 1 ergänzt durch den Einsatz von Überwachungsprogrammen EBÜ;

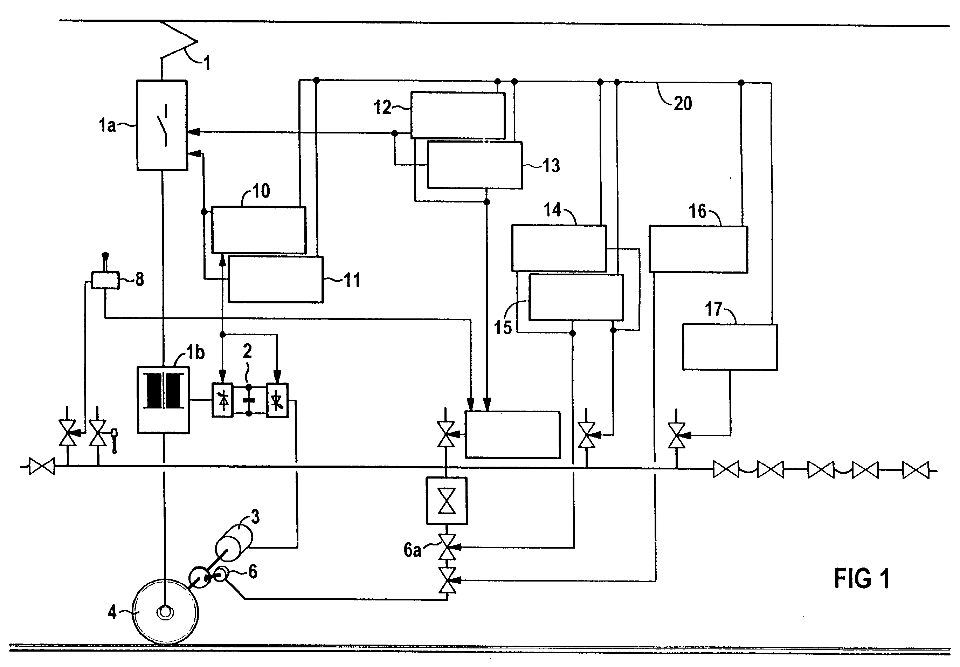

Figur 1 zeigt einen Stromabnehmer 1, der über einen Hauptschalter 1a, einen Transformator 1b und einen Stromrichter 2 mit einem Fahrmotor 3 in Verbindung steht. An einem Rad 4 ist eine elektrische Bremse angeordnet. Die elektrische Bremse ist eine Motorbremse. Der Motor wirkt dabei als Generator. Außerdem ist dem Rad 4 ein Bremszylinder 6 einer pneumatischen Bremse, die ein Rückhalteventil 6a aufweist, zugeordnet. In der Lokomotive sind mehrere Steuerungs- oder Sicherungsgeräte angeordnet. Es handelt sich dabei um zwei Antriebs-Steuergeräte (ASG) 10, 11, zwei Zug-Steuergeräte (ZSG) 12, 13, zwei Brems-Steuergeräte (BSG) 14, 15, einen Gleitschutzrechner 16 und eine Einrichtung zur Zugsicherung (INDUSI) 17. Es können auch jeweils nur ein oder mehr als zwei Geräte oder Gleitschutzrechner vorhanden sein. Alle diese Geräte sind über Leitungen, insbesondere Datenbusleitungen 20, mit den Bremsvorrichtungen verbunden. Insbesondere ist ein Rückhalteventil 6a für eine pneumatische Bremse ansteuerbar. Auch ein Führerbremsventil 8 im Führerstand der Lokomotive kann eine Bremse einschalten.

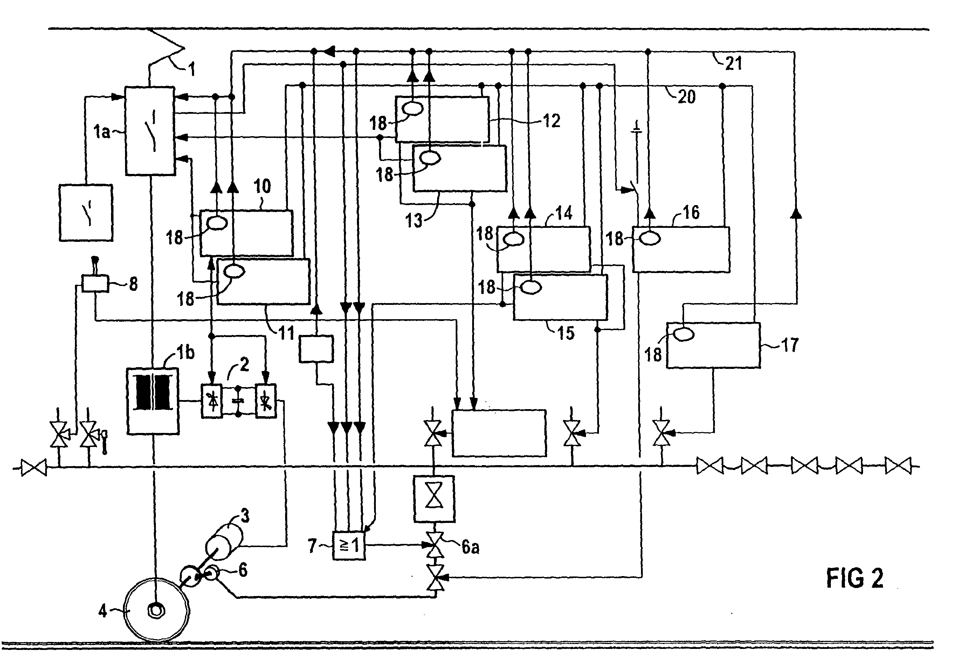

Figur 2 zeigt an, in welchen der in Figur 1 gezeigten Geräten Bremsüberwachungsprogramme (EBÜ) 18 für die elektrische Bremse angeordnet sein können. Diese Programme stellen keinen zusätzlichen Baustein dar, sondern sind in den gezeigten Geräten integriert. Es sind gegebenenfalls nur elektrische Leitungen und Kontakte (evtl. Relais) erforderlich. Die Programme wirken entweder auf den Hauptschalter 1a, der eine Verknüpfungsschaltung, z.B. ein Oder-Glied enthalten kann, oder über eine separate Verknüpfungsschaltung, z.B. ein separates Oder-Glied 7, auf das Rückhalteventil 6a, das die pneumatische Bremse auslöst. Es wird also, falls ein Fehler an der elektrischen Bremse detektiert wird, mit der pneumatischen Bremse gebremst. In der Regel gleichzeitig kann auch durch den Hauptschalter 1a der Stromabnehmer 1 heruntergefahren werden, um den Fahrmotor 3 stromlos zu machen.

Die Eingriffsmöglichkeit der Überwachung sieht dann so aus, dass beim Versagen der elektrischen Bremse der Hauptschalter 1a geöffnet und das Rückhalteventil 6a spannungslos, d.h. geöffnet wird. Die Einwirkung auf das Rückhalteventil 6a kann als Bussignal vom BSG 14, 15, als direktes Hardwaresignal über eine Leitung vom jeweiligen Überwachungsgerät und/oder über einen Hilfskontakt im Hauptschalter 1a bzw. einem seiner Hilfsrelais geschehen.

Die Steuerungsgeräte bilden ein Überwachungsnetzwerk. Die Wirkwege der Überwachung können Hardwareleitungen 21 sein, die zusätzlich in der Lokomotive verdrahtet sind oder den Weg über einen Bus 20 nehmen. Zur Überwachung müssen nicht alle EBÜs 18 integriert sein, es ist möglich, die EBÜs 18 nur im ZSG 12, 13, Gleitschutzrechner 16 oder in der Zugsicherung 17 zu installieren. Das Netzwerk wird dann grobmaschiger, aber evtl. dadurch sicherer vor Fehlauslösungen, wenn ein Gerät bei Tests sich als weniger tauglich erweist.

Bei erkanntem Fehler kann der Gleitschutzrechner 16 abgeschaltet werden, oder die Verbindung zu Gleitschutzventilen gekappt werden, damit diese spannungslos geschaltet werden, falls die Bremswirkung bei der pneumatischen Bremse nicht zustande kommt. Grund hierfür ist die Wirkung der Gleitschutzventile zwischen Hauptluftleitung und Bremszylinder.

Ohne zusätzliche Geräte kann die elektrische Bremse überwacht werden und es können gegebenenfalls Maßnahmen zum Anhalten der Lokomotive oder des Zuges auch ohne elektrische Bremse ergriffen werden.

## Patentansprüche

1. Verfahren zum Überwachen einer elektrischen Bremse in einer Lokomotive,
**dadurch gekennzeichnet, dass** in der Lokomotive vorhandene Steuerungs- oder Sicherungsgeräte verwendet werden.

2. Verfahren nach Anspruch 1,
**dadurch gekennzeichnet, dass** ein Überwachungsprogramm (18) für die elektrische Bremse im Antriebs-Steuergerät (10, 11) der Lokomotive integriert ist.

3. Verfahren nach einem der Ansprüche 1 oder 2,
**dadurch gekennzeichnet, dass** ein Überwachungsprogramm (18) für die elektrische Bremse im Zug-Steuergerät (12, 13) der Lokomotive integriert ist.

4. Verfahren nach einem der Ansprüche 1 bis 3,
**dadurch gekennzeichnet, dass** ein Überwachungsprogramm (18) für die elektrische Bremse im Gleitschutzrechner (16) integriert ist.

5. Verfahren nach einem der Ansprüche 1 bis 4,
**dadurch gekennzeichnet, dass** ein Überwachungsprogramm (18) für die elektrische Bremse im Brems-Steuergerät (14, 15) integriert ist.

6. Verfahren nach einem der Ansprüche 1 bis 5,
**dadurch gekennzeichnet, dass** ein Überwachungsprogramm (18) für die elektrische Bremse in einer Zugsicherungseinrichtung (17) integriert ist.

7. Verfahren zum Bremsen einer Lokomotive oder eines Zuges unter Verwendung des Verfahrens zur Überwachung der Bremse nach einem der Ansprüche 1 bis 6,
**dadurch gekennzeichnet, dass** nach Erkennen einer Fehlfunktion einer elektrischen Bremse die Energieversorgung des Fahrmotors (3) unterbrochen wird und/oder eine pneumatische Bremse aktiviert wird.
